# EUROPÄISCHE PATENTANMELDUNG

(11) **EP 0 893 068 A1**
(43) Veröffentlichungstag der Anmeldung: **27.01.1999**
(21) Anmeldenummer: 97112718.8
(22) Anmeldetag: 24.07.1997
(51) Int. Cl.: A23L 1/2165, A23L 1/01

(54) **Dehydratisierte Kartoffelstückchen und Verfahren zu deren Herstellung**

(71) Anmelder: ZWEIFEL POMY-CHIPS AG, 8957 Spreitenbach (CH)
(72) Erfinder: Albisser, Priscilla, 8968 Mutschellen (CH); Boehler, Guido, 8004 Zürich (CH); Schiess, Beatrix, 8400 Winterthur (CH)
(74) Vertreter: Blum, Rudolf Emil Ernst

(57) **Zusammenfassung**

Die vorliegende Erfindung betrifft ein Verfahren zur Herstellung von dehydratisierten Kartoffelstückchen. Speziell betrifft die Erfindung ein Verfahren zur Verbesserung des Bisses und des Mundgefühls heissluftexpandierter Kartoffelchips. Dies wird erfindungsgemäss erreicht, indem die zu dehydratisierenden Kartoffelstückchen einer Vereinzelung, einer Vortrocknung und einer Endtrocknung unterworfen werden, wobei entweder im Verlauf der Vortrocknung oder im Verlauf der Endtrocknung eine Expansion der Kartoffelstückchen stattfindet.

## Beschreibung

Die vorliegende Erfindung betrifft dehydratisierte, insbesondere heissluftexpandierte Kartoffelstückchen und Verfahren zu deren Herstellung. Speziell betrifft die Erfindung Verfahren zur Dehydratisierung durch Heissluftexpansion von Kartoffelscheiben, um auf diese Weise fettarme Kartoffelchips mit einem Biss, einer Textur sowie geschmacklichen Eigenschaften zu erhalten, welche mit üblichen fetthaltigen, fritierten Kartoffelchips vergleichbar sind.

Kartoffelchips und Kartoffelsticks sind insbesondere bei jüngeren Menschen äusserst beliebte Nahrungsmittel, wobei der Konsument grossen Wert auf einen guten Biss und ein angenehmes Mundgefühl legt. Produkte, die sich bezüglich der vorstehend genannten Eigenschaften einer hohen Akzeptanz erfreuen, sind Produkte, welche insbesondere infolge des Fritierverfahrens vergleichsweise grosse Mengen Fett und/oder Öl enthalten. Ein Produkt mit hohem Fettgehalt ist allerdings nach heutigen Ernährungskriterien bei vielen Konsumenten unerwünscht, weshalb im Laufe der letzten Jahre verschiedene Verfahren zur Herstellung fettarmer oder fettfreier Produkte entwickelt wurden, die in ihren Eigenschaften insbesondere den fritierten Produkten möglichst nahe kommen sollten. Solche Verfahren umfassen z.B. auch Entfettungsverfahren für mit Öl fritierte Lebensmittelprodukte. Während sich durch solche Verfahren der Fettgehalt im Produkt stark reduzieren lässt, vermögen entsprechende Produkte bezüglich ihres Bisses und des von ihnen erzeugten Mundgefühls nicht zu überzeugen. Dies liegt daran, dass bei den diversen Entfettungsverfahren, insbesondere von fritierten Gemüseprodukten, nicht nur charakteristische Geschmacksverbindungen zumindestens teilweise herausgelost werden, sondern auch die Textur der besagten fritierten Gemüseprodukte verändert bzw. aufgeweicht wird. Vor allem eine Herabsetzung der Knusprigkeit bzw. eine Verschlechterung des Bisses wird aber vom Konsumenten allgemein hin schlecht akzeptiert.

Ein zum Fritieren alternatives Dehydatisierungsverfahren, welches von vornherein im wesentlichen ohne die Verwendung von Fett, bzw. Öl auskommt, ist das Heissluftexpansionsverfahren. Mittels der Heissluftexpansion wird bei hohen Temperaturen innerhalb kurzer Zeit eine weitgehende Dehydratisierung (Entwässerung) des entsprechenden Lebensmittelproduktes erzielt (Hoch-Temperatur-Kurz-Zeit-Dehydratationsverfahren). Allerdings sind auch mittels Heissluftexpansion dehydratisierte Lebensmittelprodukte, insbesondere Kartoffelstückchen, in ihrer Textur dem klassisch fritierten Pendant unterlegen. Sie wirken ausgesprochen trocken, haben einen schlechteren Biss und vermögen auch hinsichtlich ihres Mundgefühls nicht zu überzeugen.

Ziel der vorliegenden Erfindung war es deshalb, ein Verfahren zur Herstellung von dehydratisierten Kartoffelstückchen, z.B. Chips oder Sticks, mit einem verbesserten Biss und einem verbesserten Mundgefühl zu entwickeln. Insbesondere sollten die Kartoffelstückchen, welche eine Heissluftexpansion durchlaufen haben, die für z.B. herkömmliche Chips und Sticks charakteristische Knusprigkeit bzw. den Biss aufweisen.

Ein weiteres Ziel der vorliegenden Erfindung war die Bereitstellung von dehydratisierten Kartoffelstückchen, welche die für fritierte Produkte übliche Textur, d.h. Biss und Knusprigkeit aufweisen. Insbesondere sollten gemäss der vorliegenden Erfindung im wesentlichen fettarme Kartoffelstückchen bereitgestellt werden.

Diese Ziele werden erfindungsgemäss durch das Verfahren nach dem Anspruch 1 erreicht. Die bevorzugten Ausführungsformen sind in den abhängigen Ansprüchen aufgeführt.

Einerseits bezweckt das erfindungsgemässe Dehydratisationsverfahren eine weitgehende Entwässerung der Kartoffelstückchen durch Heissluftexpansion, so dass letztendlich ein Restwassergehalt der getrockneten Kartoffelstückchen von weniger als 4 Gew.-% erhalten werden kann. Andererseits sollen die dehydratisierten Kartoffelstückchen letztendlich auch die knusprige Textur aufweisen, welche der Konsument von den herkömmlichen fritierten und fetthaltigen Produkten kennt und schätzt. Die beispielsweise für Kartoffelchips charakteristische luftige Textur wird im wesentlichen durch schnelles, fast explosionsartiges Austreten der Kartoffelflüssigkeit erreicht. Durch rapides Aufheizen der Kartoffelstückchen findet die Dehydratisierung nicht durch Diffusion der Kartoffelflüssigkeit an die Oberfläche statt, wo die Flüssigkeit verdampfen kann, sondern es werden bereits im Inneren der Kartoffelstuckchen kleine Flüssigkeits-Dampfblasen gebildet, welche dann unter Expansion des Kartoffelprodukts rasch austreten. Auf diese Weise wird beim herkömmlichen Fritieren eine luftige Textur erzeugt, welche durch die Heissluftexpansion nachzuahmen ist.

Das Heissluftexpansionsverfahren gemäss der vorliegenden Erfindung zur Dehydratisierung von Kartoffelstückchen umfasst vier wesentliche Verfahrensschritte, wobei im ersten Schritt die zu dehydratisierenden Kartoffelstückchen einem Blanchiervorgang, dann einem Vereinzelungsvorgang, einem Vortrocknungsvorgang und schliesslich im vierten Schritt einem Endtrocknungsvorgang unterworfen werden.

Der für die erstrebte Textur entscheidende Schritt der Expansion kann dabei erfindungsgemäss einerseits im Rahmen des Endtrocknungsschritts, andererseits im Rahmen des Vortrocknungsschritts bewirkt werden.

Bevorzugt wird der Riffelschnitt oder Wellenschnitt zur Herstellung von heissluftexpandierten Kartoffelstückchen eingesetzt, da dadurch die Kartoffelstückchen beim Trocknen weniger aneinander kleben und daher die Vereinzelung für die Verfahrensvariante reduziert werden kann, in welcher die Expansion im Rahmen des Endtrocknungsvorgangs stattfindet. Auch hat das Endprodukt eine gleichmässigere Oberflächenstruktur und einen besseren Biss.

Grundsätzlich sind für das erfindungsgemässe Verfahren alle Kartoffelsorten geeignet. Für die Durchführung des erfindungsgemässen Heissluftexpansionsverfahrens werden die Kartoffelstückchen, z.B. die Kartoffelscheiben, zunächst im ersten Verfahrensschritt einem Blanchiervorgang unterworfen, und zwar gleichgültig ob die Expansion während dem Vortrocknungs- oder dem Endtrocknungsvorgang stattfinden soll.

Dies liegt daran, dass zur Imitation des Fritierverfahrens durch das Heissluftexpansionsverfahren neben dem primären Dehydratisieren auch noch ein Kochvorgang notwendig ist, welcher für die Ausbildung von charakteristischen Geschmacksverbindungen verantwortlich ist. Da beim Dehydratisieren durch Heissluftexpansion an sich kein Kochvorgang mitumfasst ist, muss ein Blanchieren vor der eigentlichen Heissluftexpansion vorgeschaltet werden. Durch das Blanchieren wird neben der Vermeidung von Bräunungen, beispielsweise in den Kartoffelscheiben oder Sticks, insbesondere verhindert, dass das Endprodukt einen rohen Geschmack aufweist.

Üblicherweise werden dabei die Kartoffelstückchen, welche mittels Heissluftexpansion dehydratisiert werden sollen, während etwa 30 Sekunden bis 15 Minuten, vorzugsweise zwischen 8-10 Minuten bei einer Temperatur von zwischen 70-100°C, vorzugsweise zwischen 80-95°C einer Blanchierung unterzogen.

Zur Verbesserung des Geschmacks des Endproduktes kann das Blanchierwasser mit Salz, vorzugsweise mit HVP (hydrolyzed vegetable protein) versetzt werden. Auch andere Geschmacksstoffe können zugegeben werden. Die Dosierung beträgt etwa 0-4 Gew.-%, vorzugsweise 1 bis 2 Gew.-% bezogen auf das Kartoffeltrockengewicht.

In einer bevorzugten Ausführungsform des erfindungsgemässen Verfahrens findet die Expansion der Kartoffelstückchen während des Endtrocknungsschritts statt. Die dabei relevanten Parameter, z.B. Temperatur und Heizzeiten müssen entsprechend speziell auf diese Ausführungsform abgestimmt sein, bei welcher die Expansion während des Endtrocknungsschritts stattfindet. Die folgenden Ausführungsformen gelten daher zunächst nur für das Dehydratisierungsverfahren, bei welchem die Expansion der Kartoffelstückchen während des Endtrocknungsvorgangs stattfindet:

Die Kartoffelstückchen werden bei dieser bevorzugten Ausführungsform vor dem Vortrocknungsvorgang zunächst maschinell oder von Hand vereinzelt, um so ein Zusammenkleben der Kartoffelstückchen, z.B. von rohen Kartoffelchips, und damit eine inhomogene Trocknung zu verhindern. Bevorzugt werden bei der Vereinzelung sogenannte Monolayers gebildet, d.h. einschichtige Lagen von einzeln vorliegenden Kartoffelscheiben, welche anschliessend getrocknet werden können.

Der darauf folgende Vortrocknungsvorgang umfasst mindestens einen der folgenden Schritte:
Umströmen der Kartoffelstückchen während 2-6 Minuten mit gleichmässig fliessender, im wesentlichen laminarer, heisser Luft von einer Temperatur von 160 bis 220°C, vorzugsweise von 200°C, und/oder
Umströmen der Kartoffelstückchen während 4-12 Minuten mit gleichmässig fliessender, im wesentlichen laminarer, heisser Luft von einer Temperatur von 80-150°C, vorzugsweise von 130°C, und gegebenenfalls
Umströmen der Kartoffelstückchen während etwa 0.5-8 Stunden mit gleichmässig fliessender, im wesentlichen laminarer, heisser Luft von 40-70°C, vorzugsweise von 48°C, vorzugsweise bei einer kontrollierten Luftfeuchtigkeit von 50-60% relativer Feuchte,
wobei die vorgetrockneten Kartoffelstückchen letztendlich einen Wassergehalt von etwa 9 bis 13 Gew.-%, vorzugsweise von etwa 10 Gew.-% aufweisen.

In einer besonders bevorzugten Ausführungsform werden die blanchierten und vereinzelten Kartoffelstückchen beim Vortrocknungsvorgang während 4 Minuten durch laminare, heisse Luft von einer Temperatur von 200°C, dann während etwa 9 Minuten durch im wesentlichen laminare, heisse Luft von einer Temperatur von 130°C und schliesslich während einer weiteren Stunde durch im wesentlichen laminare, heisse Luft von 48°C mit einer relativen Feuchte von 60% auf einen Wassergehalt von etwa 10 Gew.-% getrocknet.

Im dritten Schritt, d.h. dem Endtrocknungsvorgang, werden die vorgetrockneten Kartoffelstückchen durch schnell strömende heisse Luft von einer Temperatur von zwischen 265 bis 295°C, vorzugsweise 270°C, während etwa 10 bis 36 Sekunden auf einen Wassergehalt von weniger als 4 Gew.-% getrocknet und gleichzeitig expandiert.

Die schnell strömende heisse Luft von einer Temperatur von zwischen 265 bis 295°C wird vorzugsweise durch das sogenannte Torbed-Prinzip erzeugt : Der Torbed Prozessor umfasst eine zylindrische Anordnung, in welcher eine Gasströmung durch feststehende Schaufeln erzeugt wird, welche ihrerseits eine toroidale Partikelströmung erzeugt. Durch die Spiralströmung im kreisförmig gestalteten Prozessraum und durch den Chargenprozess erfolgt eine gleichmässige Expansion.

Damit schwebt im Torbed Prozessor eine flache Produktschicht, die durch den Impuls präzise ausgelegter Luftstrahlen getragen wird. Die Anordnung der Schaufeln innerhalb des Prozessors führt das Prozess-Medium unter einen Winkel, um eine horizontale Bewegung zur intensiven Vermischung von Produkt und Luft zu erzeugen. Das Ergebnis ist eine verhältnismässig lange Kontaktzeit innerhalb der Produktschicht. Die hohe Luftgeschwindigkeit in der unteren Produktschicht bewirkt eine effektive Wärmeübertragung.

Vorzugsweise werden die vorgetrockneten Kartoffelstückchen vor dem Endtrocknungsvorgang noch zusätzlich einer Zwischenlagerung unterworfen, welche mindestens 1 Tag, vorzugsweise mindestens 7 Tage dauert und vorzugsweise bei Raumtemperatur durchgeführt wird. Durch die Zwischenlagerung wird eine gleichmässige Feuchtigkeitsverteilung innerhalb der Kartoffelstückchen bewirkt, so dass beim anschliessenden Endtrocknen eine homogene Expansion auftritt.

In der zweiten bevorzugten Ausführungsform der erfindungsgemässen Heissluftexpansion wird die Expansion der Kartoffelstückchen im Rahmen der Vortrocknung erreicht. Auch hier müssen die dabei relevanten Parameter, z.B. Temperatur und Zeiten speziell auf diese Ausführungsform abgestimmt werden, bei welcher die Expansion bereits während des Vortrocknungsschritts stattfindet. Die folgenden Ausführungsformen gelten daher zunächst nur für das Dehydratisierungsverfahren, bei welchem die Expansion der Kartoffelstückchen während des Vortrocknungsvorgangs stattfindet:

Der Vortrocknungsvorgang umfasst dabei mindestens einen der folgenden Schritte:
Umströmen der Kartoffelstückchen während etwa 2 bis 8 Minuten, vorzugsweise während 4 Minuten durch turbulente, heisse Luft von einer Temperatur von zwischen 130 bis 230°C, vorzugsweise 140-170°C, und einer mittleren Luftgeschwindigkeit von 1500-6000 m/min, vorzugsweise 4000 m/min, und/oder
Umströmen der Kartoffelstückchen während etwa 4 bis 10 Minuten, vorzugsweise während 5-6 Minuten durch turbulente, heisse Luft mit einer Temperatur von zwischen 100 bis 190°C, vorzugsweise 120-140°C, und einer mittleren Luftgeschwindigkeit von 1500-6000 m/min, vorzugsweise von 2500 m/min, wobei
die Kartoffelstückchen während des Vortrocknungsvorgangs durch die turbulente heisse Luft gleichzeitig vereinzelt, sowie auf einen Wassergehalt von etwa 4-35%, vorzugsweise von etwa 10-20% bezogen auf das Gewicht getrocknet, und ausserdem expandiert werden.

Die schnell strömende, turbulente heisse Luft von einer Temperatur von zwischen 120 bis 170°C wird vorzugsweise durch das sogenannte Jetzone-Prinzip erzeugt und der Vortrocknungsvorgang findet vorzugsweise in einem sogenannten Jetzone-Trockner statt : Bei der Jetzone Trocknung wird in eine kontinuierlich betriebene abgeschlossene Wanne oder auf ein nicht perforiertes Förderband, die zu trocknenden Kartoffelchips gegeben und dann Luft mit einer grossen Geschwindigkeit durch eine grosse Zahl von oben eintauchende Rohre eingeblasen. Diese heisse Luft trifft auf den Wannenboden oder auf das nicht perforierte Förderband und erzeugt so einerseits ein Luftbett für die aufliegenden Kartoffelstückchen, andererseits wird die Luft turbulent zurückreflektiert und erzeugt so diejenigen turbulenten Bedingungen, welche für den Vereinzelungsvorgang erwünscht sind.

Durch dieses Trocknungsprinzip werden die Kartoffelstückchen einerseits durch das besagte Luftbett am Absetzen auf den Wannenboden gehindert, womit keinerlei Verbrennungen oder zumindest eine inhomogene Dehydratisierung verhindert wird. Andererseits wird durch die, von den oben eintauchenden Rohre, eingeblasene turbulente Luft eine hervorragende Vereinzelung der Kartoffelstückchen bewirkt, während gleichzeitig durch dieselbe heisse Luft eine sehr rasche Dehydratisierung sowie die gewünschte Expansion der Kartoffelstückchen hervorgerufen wird.

Durch die hohe Luftgeschwindigkeit von zwischen 2000 bis 6000 m/min wird nicht nur eine ständige Bewegung der einzelnen Kartoffelstückchen, z.B. Kartoffelchips, und damit eine effiziente Vereinzelung bewirkt, sondern gleichzeitig eine hohe Wärmeübertragung auf die Kartoffelstückchen, so dass, völlig überraschend, bei vergleichsweise niedrigen Temperaturen von bereits etwa 160°C eine Expansion der Kartoffelstückchen stattfindet.

In einer bevorzugten Ausführungsform werden die Kartoffelstückchen während dem Vortrocknungsvorgang zunächst während etwa 4 Minuten durch turbulente, heisse Luft von einer Temperatur von etwa 160°C, und einer Geschwindigkeit von etwa 4000 m/min und anschliessend während weiteren etwa 4 Minuten und 40 Sekunden durch turbulente, heisse Luft mit einer Temperatur von etwa 160°C, und einer Geschwindigkeit von etwa 3000 m/min vereinzelt und gleichzeitig auf einen Wassergehalt von etwa 10% bezogen auf das Gewicht getrocknet und expandiert.

Im Rahmen der Endtrocknung werden die vorgetrockneten Kartoffelstückchen durch gleichmässig, vorzugsweise laminar, strömende heisse Luft mit einer Temperatur von zwischen 100 bis 140°C, vorzugsweise 130°C, während etwa 5 bis 20 Minuten, vorzugsweise etwa 10 Minuten auf einen Endwassergehalt von weniger als 4 Gew.-% getrocknet.

Im dritten Verfahrensschritt wird zur bereits luftigen Textur noch ein knuspriger Charakter zugefügt.

In dieser zweiten Verfahrensvariante wird die Expansion der Kartoffelstückchen bereits im ersten Verfahrensschritt bei überraschend niedrigen Temperaturen erreicht, während bei der ersten Verfahrensvariante die Expansion bei vergleichsweise hohen Temperaturen im Rahmen des dritten Verfahrensschritt, d.h. beim Endtrocknen erreicht wird. Ein weiterer Vorteil der zweiten Verfahrensvariante, d.h. der Variante, in welcher die Expansion während des Vortrocknungsvorgangs stattfindet, besteht im Umstand, dass dank der turbulenten heissen Luft die zu trocknenden Kartoffelstückchen, z.B. Kartoffelchips, direkt durch den Heissluftstrom vereinzelt werden, anstatt einschichtig (einen Monolayer bildend) mittels Maschinen oder von Hand vereinzelt werden zu müssen. Durch den turbulenten Luftstrom wird damit der Vereinzelungsvorgang und der Vortrocknungsvorgang zusammen, d.h. zeitgleich durchgeführt und so ein Zusammenkleben der Kartoffelstückchen wirksam verhindert.

Durch die Kombination der oben ausgeführten vier Verfahrensschritte, d.h. dem Blanchieren, dem Vereinzeln der Kartoffelstückchen, dem Vortrocknungs- und Endtrocknungsvorgang, insbesondere mit den bevorzugten Temperatur- und Zeitparametern wird die Aufgabe der Herstellung von dehydratisierten Kartoffelstückchen mit den für fritierte Produkte bekannten Biss, Geschmack und Textur erfindungsgemäss gelöst. Folglich wird durch das erfindungsgemässe Verfahren das herkömmliche Fritierverfahren auf die optimalste Weise imitiert.

In einer ganz besonders bevorzugten Ausführungsform werden die Kartoffelstückchen während dem Blanchieren, einer Zuckerung unterworfen.

Die Zuckerbehandlung strebt allgemein eine Anreicherung der Kartoffelstückchen mit Zucker an. Kartoffelstückchen, z.B. Kartoffelchips oder Sticks, die der Zuckerbehandlung ausgesetzt wurden, weisen nach der erfindungsgemässen Heissluftexpansion einen besonders knackigen, knusprigen Biss und ein wesentlich verbessertes Mundgefühl auf. Der Zucker spielt dabei die Rolle des Fetts als Mundgefühlsverbesserer, weil er dank seiner guten und raschen Wasserlöslichkeit im Gegensatz zur Stärke die Durchspeichelung erleichtert. Da er in die Kartoffelstückchen eindringt, ergibt er keine störende Süsse, wie wenn er als Teil der Würzmischung am Schluss des Fritiervorgangs aufgestreut werden würde.

Gegenüber dem einfachen Aufstreuen von Zucker auf fertig dehydratisierte Kartoffelstückchen, z.B. Kartoffelchips bzw. Sticks, ergibt das erfindungsgemässe Verfahren die Möglichkeit, Chips bzw. Sticks mit bis zu 20 Gew.-% Zucker bezogen auf das Endproduktgewicht zu beladen, während durch das besagte nachträgliche Aufstreuen maximal 6 Gew.-% Zucker an fettarmen Chips bzw. Sticks haften würden.

Infolge der Zuckerbehandlung wird der Zellturgor (Zelldruck) herabgesetzt, der Wassergehalt der Kartoffelstückchen wird herabgesenkt (osmotische Trocknung), der Trockensubstanzgehalt steigt an und es ist eine Anreicherung der Kartoffelstückchen, z.B. Chips bzw. Sticks, je nach Einwirkungszeit mit bis zu 20 % Zuckergehalt, vorzugsweise 6 bis 8 Gew.-%, möglich. Trotz eines Zuckergehaltes von ungefähr 8 Gew.-% werden derartig behandelte Chips bzw. Sticks geschmacklich - trotz einem leicht süssen Hintergrundgeschmack - immer noch als gesalzenes Produkt empfunden. Wenn dagegen eine vergleichsweise geringe Zuckermenge auf ein bereits fritiertes Gemüseprodukt aufgestreut wird, ergäbe schon eine Aufstreuung mit 2-3 % Zucker ein eher als Süssware empfundenes Produkt.

Unter Zucker, die für die Verwendung im vorliegenden Verfahren geeignet sind, sind nicht reduzierende Zucker zu verstehen. Unter diese Gruppe fallen z.B. Palatinit®, Isomalt und insbesondere die Saccharose.

Die Zuckerbehandlung findet im Rahmen des Blanchiervorgangs statt, wobei die Einwirkungszeit der Kartoffelstückchen mit dem Zucker ausreichend lang berechnet werden muss. Vorzugsweise wird das Blanchierwasser mit 1 bis 5% Zucker angereichert und die Kartoffelstückchen während etwa 30 Sekunden bis 15 Minuten in der Blanchier-Zuckerlösung behandelt. Ganz besonders bevorzugt wird das Blanchierwasser mit 2 bis 4% Zucker angereichert und die Kartoffelstückchen während zwischen 4 bis 15 Minuten in der Blanchier-Zuckerlösung eingelegt.

Überraschenderweise wurde gefunden, dass die mit Zucker vorbehandelten Kartoffelstückchen, z.B. Chips bzw. Sticks bei den üblichen Heisslufttemperaturen von ungefähr 100-320°C überhaupt nicht caramelisieren. Es zeigte sich ferner, dass durch die Zuckerbehandlung soviel Zucker in die Kartoffelstückchen eindringen kann und in den Kartoffelstückchen nach dem Heissluftexpandieren verbleibt, dass letztendlich ein wesentlich knackigerer Biss sowie ein besseres Mundgefühl realisiert werden kann, als bei Produkten ohne einleitende Zuckerbehandlung. Mit Hilfe der erfindungsgemässen Zuckerbehandlung von Kartoffelstückchen kann dem stärker werdenden Wunsch nach fettärmeren Kartoffelstückchen, z.B. Chips bzw. Sticks, bei gleichbleibenden Produkteigenschaften, d.h. Knusprigkeit bzw. Biss, entsprochen werden.

Ein Kalorienvergleich zwischen handelsüblichen fetthaltigen Kartoffelstückchen, z.B. Kartoffelchips, und zuckerbehandelten Kartoffelstückchen fällt eindeutig zugunsten der Zuckerbehandlung aus. Der in das Kartoffelstückchen eindringende Zucker weist einen nutritiven Wert von 4 kcal pro g auf und liegt damit ungefähr im Bereich der Kartoffelstärke. Demgegenüber weist Fett mit 9 kcal pro g einen mehr als doppelt so hohen Kaloriengehalt auf, so dass der Ersatz von Fett durch Zucker einen nachhaltig geringeren Kaloriengehalt für die Chips bzw. Sticks nach sich zieht.

Nach den erfindungsgemässen Verfahrensschritten bestehend aus Blanchieren, Vereinzeln, Dehydratisierung, d.h. der Vortrocknung und der Endtrocknung wobei gegebenenfalls während dem Blanchieren noch eine Zuckerbehandlung durchgeführt wird, kann, nach dem Endtrocknungsvorgang, noch ein Würzschritt zur Verbesserung des Geschmacks durchgeführt werden.

Ein weiterer Aspekt der vorliegenden Erfindung besteht in den dehydratisierten Kartoffelstückchen, welche gemäss dem oben beschriebenen Verfahren in seinen zwei Varianten herstellbar sind. Dabei kann die Expansion der Kartoffelstückchen in einer Variante im Rahmen der Vortrocknung oder im Rahmen der zweiten Variante während der Endtrocknung stattfinden.

In einer bevorzugten Ausführungsform sind die Kartoffelstückchen flache, riffel- oder wellengeschnittene Kartoffelscheiben zur Herstellung von Kartoffelchips, vorzugsweise in einer Dicke von 1.2 bis 2.3 mm.

Die erfindungsgemässen Kartoffelstückchen weisen in einer bevorzugten Ausführungsform nach dem Dehydratisationsvorgang einen Zuckergehalt von ungefähr 6-8 Gew.-% auf.

Ausserdem weisen die dehydratisierten Kartoffelstückchen nach dem Dehydratisationsvorgang in einer bevorzugten Ausführungsform einen Wassergehalt von weniger als 4 Gew.-% auf.

In einer bevorzugten Ausführungsform weisen die fertigen, dehydratisierten und all fällig gewürzten Kartoffelstückchen einen Fettgehalt von 2-12 Gew.-%, vorzugsweise zwischen 4-5 Gew.-%, auf. Dieser geringe Fettgehalt entsteht durch den Würzvorgang, wobei die Würzstoffe in einem geeigneten Öl suspendiert bzw. gelöst sind und dieses Öl auf die dehydratisierten Chips aufgesprüht wird. Der geringe Fettanteil ist insbesondere für die bessere Haftung der Würzstoffe erforderlich.

Der letzte Aspekt der vorliegenden Erfindung besteht in der Verwendung einer Dehydratisierungsvorrichtung auf der Grundlage des oben beschriebenen Jetzone-Prinzips zur Durchführung einer Heissluftexpansion im Rahmen des Vortrocknungsvorgangs. Die besagte Vorrichtung umfasst eine kontinuierlich betriebene abgeschlossene Wanne oder ein nicht perforiertes Förderband, auf die die zu trocknenden Kartoffelstückchen gegeben werden und wobei durch eine grosse Zahl von oben eintauchende Rohre Luft mit einer grossen Geschwindigkeit eingeblasen wird. Diese heisse Luft trifft auf den Wannenboden oder auf das nicht perforierte Förderband und erzeugt so einerseits ein Luftbett für die aufliegenden Kartoffelstückchen, andererseits wird die Luft turbulent zurückreflektiert und erzeugt so diejenigen turbulenten Bedingungen, welche für den Vereinzelungsvorgang erwünscht sind.

Durch diese Vorrichtung werden die Kartoffelstückchen einerseits durch das besagte Luftbett am Absetzen auf den Wannenboden gehindert, womit keinerlei Verbrennungen oder zumindest eine inhomogene Dehydratisierung verhindert wird. Andererseits wird durch die, von den oben eintauchenden Rohre, eingeblasene turbulente Luft eine hervorragende Vereinzelung der Kartoffelstückchen bewirkt, während gleichzeitig durch dieselbe heisse Luft eine Dehydratisierung sowie die gewünschte Expansion der Kartoffelstückchen hervorgerufen wird.

Durch die hohe Luftgeschwindigkeit von zwischen 2000 bis 6000 m/min wird nicht nur eine ständige Bewegung der einzelnen Kartoffelstückchen, z.B. Kartoffelchips, und damit eine effiziente Vereinzelung bewirkt, sondern gleichzeitig eine hohe Wärmeübertragung auf die Kartoffelstückchen, so dass, völlig überraschend, bei vergleichsweise niedrigen Temperaturen von bereits etwa 160°C eine Expansion der Kartoffelstückchen stattfindet.

Nach der Expansion müssen die vorgetrockneten Kartoffelstückchen noch endgetrocknet werden, um so ein gleichmässig getrocknetes Produkt zu erhalten.

Das Verfahren soll nachfolgend am Beispiel von Kartoffelchips detaillierter beschrieben werden :

Die Kartoffeln werden nach gängigen Verfahren vorbereitet, d.h. man lässt gewaschene und geschnittene Kartoffelscheiben (Scheibendicke etwa 1,5 mm) abtropfen und legt sie anschliessend während eines bestimmten Zeitraums in eine 3%-ige Zucker-Blanchierlösung ein. Anschliessend lässt man die oberflächlich anhaftende Lösung abtropfen.

Vorzugsweise wird vor dem Vortrocknen dann eine Vereinzelung durchgeführt, wenn die Expansion im Rahmen der Endtrocknung stattfinden soll, um so ein Zusammenkleben der Kartoffelscheiben zu verhindern.

Bei der Heissluftexpansion zur Dehydratisierung soll die Variante beschrieben werden, in welcher die Expansion der Kartoffelscheiben während des Endtrocknungsvorgangs bewirkt wird. Zunächst wird daher bei der Vortrocknung während 4 bis 6 Minuten eine Temperatur von vorzugsweise 170-220°C eingehalten. Dann wird immer noch im Rahmen der Vortrocknung im gleichen Trockner während 7 bis 12 Minuten eine Temperatur von 80 bis 150 eingestellt. Um die Vortrocknung abzuschliessen werden die Kartoffelscheiben sofort in einen Trockner gegeben, in welchem sie eine weitere Stunde auf einen letztendlichen Kartoffelfeuchtigkeitsgehalt von zwischen 9-13 Gew.-%, vorzugsweise auf 10 Gew.-% getrocknet werden. Dabei wird im Trockner die relative Luftfeuchte auf 50-60% Feuchte geregelt. Die Temperatur im Trockner wird vorzugsweise auf 48°C eingestellt.

Anschliessend werden die vorgetrockneten Kartoffelscheiben vorzugsweise noch während 1 Woche bei Raumtemperatur zwischengelagert.

Schliesslich werden die homogen vorgetrockneten Kartoffelscheiben bei einer Temperatur von vorzugsweise 240 bis 290°C endgetrocknet.

Ein aus dem Heissluftexpander austretendes Produkt weist aufgrund der Zucker-Blanchierbehandlung einen verbesserten Biss auf.

Durch das Blanchieren der Kartoffelstückchen vor der Heissluftexpansion wird nicht nur die Bräunung im wesentlichen unterdrückt, sondern Zucker wird deutlich leichter aufgenommen als bei unblanchierten Kartoffelstückchen. Für die gleiche Zuckerung reicht eine niedrigere Zuckerkonzentration bei gleicher Einwirkungszeit und Temperatur.

Das erfindungsgemässe Verfahren wird nun anhand von Beispielen näher beschrieben. Diese Beispiele sind in keiner Weise als den Schutzbereich beschränkend anzusehen.

### Beispiel 1:

Verfahren für die Herstellung von heissluftexpandierten Kartoffelchips wobei die Expansion im Rahmen der Endtrocknung stattfindet.

Die Kartoffeln werden gewaschen, geschält und in 1.5 mm dicke Riffelscheiben geschnitten. Oberflächlich anhaftende Stärke wird mit Wasser abgewaschen. Die Scheiben werden während 8 Minuten bei 85°C im mit 1% Salz und 3% Zucker versetzten Wasser blanchiert und gezuckert. Dann werden die blanchierten und gezuckerten Kartoffelscheiben abgetropft und vereinzelt, d.h. sie werden einzeln auf Gitter gelegt (zur Bildung eines Monolayers), und zunächst während 2 Minuten bei 200°C und anschliessend während etwa 10 Minuten bei 130°C auf einen Endwassergehalt von 25 Gew.-% getrocknet. Zum Abschluss der Vortrocknung werden die Kartoffelscheiben in einen Trockner gelegt und noch etwa 1 Stunde bei 48°C getrocknet. Die Luftfeuchtigkeit ist auf 60% relativer Feuchte geregelt. Der letztendliche Kartoffelfeuchtigkeitsgehalt beträgt am Ende der Vortrocknung etwa 10 Gew.-%.

Zum Feuchtigkeitsausgleich werden die vorgetrockneten Scheiben während etwa 8 Tagen bei Raumtemperatur gelagert. Im Gegensatz zu den nassen Scheiben sind die vorgetrockneten Scheiben lagerfähig.

Die vorgetrockneten Scheiben werden in Chargen von 400 g einem Heissluftexpander zugeführt, welcher nach dem Torbed-Prinzip funktioniert. Die Expansion erfolgt bei 285°C während 30 Sekunden. Anschliessend werden die Scheiben mit 4 Gew.-% Öl, bezogen auf das Trockengewicht, besprüht und mit 8 Gew.-% Seasoning, bezogen auf das Trockengewicht, gewürzt.

Die derart hergestellten Chips zeichnen sich durch einen besonders knackigen Biss und ein angenehmes Mundgefühl aus.

### Beispiel 2:

Verfahren für die Herstellung von fettarmen, heissluftexpandierten Kartoffelchips wobei die Expansion im Rahmen der Vortrocknung stattfindet.

Die Kartoffeln werden gewaschen, geschält und in 1.5 mm dicke Riffelscheiben geschnitten. Oberflächlich anhaftende Stärke wird mit Wasser abgewaschen. Die Scheiben werden während 8 Minuten bei 85°C im mit 1% Salz und 2,5% Zucker versetzten Wasser blanchiert und gezuckert. Nach dem Blanchieren werden die abgetropften Scheiben mit einer Belegung von 7 kg/m² in einen Wolverine Jetzone-Trockner gebracht, wo sie zunächst während 4 Minuten durch turbulente, heisse Luft mit einer Temperatur von 160°C, und einer Geschwindigkeit von 4000 m/min und anschliessend während weiteren 6 Minuten durch turbulente, heisse Luft mit einer Temperatur von etwa 120°C, und einer Geschwindigkeit von 2500 m/min vereinzelt werden und auf einen Wassergehalt von etwa 10% bezogen auf das Gewicht getrocknet und expandiert werden.

Die vorgetrockneten Scheiben werden dann auf einen Trockner gelegt und bei 130°C während etwa 10 Minuten auf einen Endwassergehalt von 4 Gew.-% getrocknet.

Anschliessend werden die endgetrockneten Scheiben mit 4 Gew.-% Öl, bezogen auf das Trockengewicht, besprüht und mit 8 Gew.-% Seasoning, bezogen auf das Trockengewicht, gewürzt.

Die derart hergestellten fettarmen Chips zeichnen sich durch einen besonders knackigen Biss und ein angenehmes Mundgefühl aus.

## Patentansprüche

1. Verfahren zur Herstellung von fettarmen, dehydratisierten Kartoffelstückchen, dadurch gekennzeichnet, dass die zu dehydratisierenden Kartoffelstückchen einem Blanchiervorgang, einem Vereinzelungsvorgang, einem Vortrocknungsvorgang und einem Endtrocknungsvorgang unterzogen werden, wobei entweder im Verlauf des Vortrocknungsvorgangs oder im Verlauf des Endtrocknungsvorgangs eine Expansion der Kartoffelstückchen stattfindet.

2. Verfahren gemäss Anspruch 1, dadurch gekennzeichnet, dass die Expansion der Kartoffelstückchen während des Endtrocknungsvorgangs stattfindet.

3. Verfahren gemäss einem der Ansprüche 1 oder 2, dadurch gekennzeichnet, dass der Vortrocknungsvorgang mindestens einen der folgenden Schritte umfasst :
Umströmen der Kartoffelstückchen während 2-6 Minuten mit gleichmässig fliessender, im wesentlichen laminarer, heisser Luft von einer Temperatur von 160 bis 220°C, vorzugsweise von 200°C, und/oder
Umströmen der Kartoffelstückchen während 4-12 Minuten mit gleichmässig fliessender, im wesentlichen laminarer, heisser Luft von einer Temperatur von 80-150°C, vorzugsweise von 130°C, und gegebenenfalls
Umströmen der Kartoffelstückchen während etwa 0.5-8 Stunden mit gleichmässig fliessender, im wesentlichen laminarer, heisser Luft von 40 bis 70°C, vorzugsweise von 48°C, bei geregelter Luftfeuchte von 50-60% relativer Feuchte,
wobei die vorgetrockneten Kartoffelstückchen letztendlich einen Wassergehalt von etwa 9 bis 13 Gew.-%, vorzugsweise von etwa 10 Gew.-% aufweisen.

4. Verfahren gemäss einem der Ansprüche 1 bis 3, dadurch gekennzeichnet, dass die Kartoffelstückchen beim Endtrocknen durch schnell strömende heisse Luft mit einer Temperatur von zwischen 265 bis 295°C, vorzugsweise 270°C, während etwa 10 bis 36 Sekunden auf einen Wassergehalt von weniger als 4 Gew.-% getrocknet und expandiert werden.

5. Verfahren gemäss einem der Ansprüche 1 bis 4, dadurch gekennzeichnet, dass vor dem Endtrocknen noch zusätzlich eine Zwischenlagerung durchgeführt wird, welche mindestens 1 Tag, vorzugsweise mindestens 7 Tage dauert und vorzugsweise bei Raumtemperatur durchgeführt wird.

6. Verfahren gemäss Anspruch 1, dadurch gekennzeichnet, dass die Expansion der Kartoffelstückchen während des Vortrocknungsvorgangs stattfindet.

7. Verfahren gemäss Anspruch 6, dadurch gekennzeichnet, dass dass der Vereinzelungs- und Vortrocknungsvorgang mindestens einen der folgenden Schritte umfasst :
Umströmen der Kartoffelstückchen während etwa 2 bis 8 Minuten, vorzugsweise während 4 Minuten durch turbulente, heisse Luft von einer Temperatur von zwischen 130 bis 230°C, vorzugsweise 140-170°C, und einer mittleren Luftgeschwindigkeit von 1500-6000, vorzugsweise 4000 m/min, und/oder
Umströmen der Kartoffelstückchen während etwa 4 bis 10 Minuten, vorzugsweise während 6 Minuten durch turbulente, heisse Luft mit einer Temperatur von zwischen 100 bis 190°C, vorzugsweise 120-140°C, und einer mittleren Luftgeschwindigkeit von 1500-6000 m/min, vorzugsweise 2500 m/min wobei
die Kartoffelstückchen gleichzeitig vereinzelt, auf einen Wassergehalt von etwa 4-35%, vorzugsweise von etwa 10-20% bezogen auf das Gewicht getrocknet, und expandiert werden.

8. Verfahren gemäss einem der Ansprüche 6 oder 7, dadurch gekennzeichnet, dass die vorgetrockneten Kartoffelstückchen beim Endtrocknungsvorgang mit gleichmässig und langsam fliessender, im wesentlichen laminarer, heisser Luft von einer Temperatur von zwischen 100 bis 140°C, vorzugsweise 130°C, während etwa 5 bis 20 Minuten, vorzugsweise etwa 10 Minuten umströmt und damit auf einen Endwassergehalt von weniger als 4 Gew.-% getrocknet werden.

9. Verfahren gemäss einem der Ansprüche 1 bis 8, dadurch gekennzeichnet, dass der Blanchiervorgang der zu heissluftexpandierenden Kartoffelstückchen während zwischen 30 Sekunden und 15 Minuten, vorzugsweise während 4-12 Minuten, bei einer Temperatur von zwischen 70-100°C, vorzugsweise zwischen 80-95°C, durchgeführt wird.

10. Verfahren gemäss einem der Ansprüche 1 bis 9, dadurch gekennzeichnet, dass die Kartoffelstückchen während dem Blanchierungsvorgang einer Zuckerung unterworfen werden.

11. Verfahren gemäss Anspruch 10, dadurch gekennzeichnet, dass für die Zuckerung nichtreduzierende Zucker, bevorzugt Saccharose verwendet werden.

12. Verfahren gemäss einem der Ansprüche 1 bis 11, dadurch gekennzeichnet, dass die Kartoffelstückchen nach dem Endtrocknen noch einer Würzung unterworfen werden.

13. Dehydratisierte Kartoffelstückchen herstellbar nach dem Verfahren gemäss einem der Ansprüche 1 bis 12.

14. Kartoffelstückchen nach Anspruch 13, dadurch gekennzeichnet, dass die Kartoffelstückchen Kartoffelscheiben, vorzugsweise einer Dicke von 1.4 bis 2.3 mm, oder Kartoffelsticks von einer Dicke von 1 bis 3 mm enthalten oder daraus bestehen.

15. Kartoffelstückchen nach einem der Ansprüche 13 oder 14, dadurch gekennzeichnet, dass sie nach dem Dehydratisationsvorgang einen Zuckergehalt von ungefähr 5-10 Gew.-% aufweisen.

16. Kartoffelstückchen nach einem der Ansprüche 13 bis 15, dadurch gekennzeichnet, dass die dehydratisierten Kartoffelstückchen einen Wassergehalt von weniger als 4 Gew.-% aufweisen.

17. Kartoffelstückchen nach einem der Ansprüche 13 bis 16, dadurch gekennzeichnet, dass sie einen Fettgehalt von 2-12 Gew.-%, vorzugsweise zwischen 4-5 Gew.-%, aufweisen.

18. Verwendung einer Dehydratisierungsvorrichtung umfassend eine kontinuierlich betriebene abgeschlossene Wanne oder ein nicht perforiertes Förderband, auf welches die zu trocknenden Kartoffelscheiben gegeben werden und wobei durch von oben in die Wanne eintauchende Rohre ein turbulenter Luftstrom mit grosser Geschwindigkeit sowie ein Luftbett für die aufliegenden Kartoffelstückchen erzeugt wird, zur Durchführung des Verfahrens gemäss der Ansprüche 6 bis 8.
